# EUROPEAN PATENT SPECIFICATION

(11) **EP 3 159 709 B1**
(45) Date of publication and mention of the grant of the patent: **26.02.2020**
(21) Application number: 15190843.1
(22) Date of filing: 21.10.2015
(51) Int. Cl.: G01S 3/787, G08B 13/19

(54) **APPARATUS AND METHOD FOR DETECTING AZIMUTHAL ANGLE OF HEAT SOURCE**
VORRICHTUNG UND VERFAHREN ZUR ERKENNUNG EINES AZIMUTWINKELS EINER WÄRMEQUELLE
APPAREIL ET PROCÉDÉ DE DÉTECTION D'ANGLE AZIMUTAL DE SOURCE DE CHALEUR

(43) Date of publication of application: 26.04.2017
(73) Proprietor: Everspring Industry Co. Ltd., New Taipei City 236 (TW)
(72) Inventor: LEE, Tzong-Sheng, Chu-Nan, Miao-Li County 350 (TW)
(74) Representative: Viering, Jentschura & Partner mbB Patent- und Rechtsanwälte

(56) References cited:
- WO-A2-2009/137616
- CN-A- 102 155 995
- CN-A- 103 135 142
- CN-A- 104 280 123
- JP-A- H 095 156
- KR-A- 20090 011 921
- KR-B1- 101 417 838

## Description

### BACKGROUND OF THE INVENTION

### 1. Field of the Invention

The instant invention relates to an apparatus and a method for detecting an azimuthal angle of a heat source; in particular, to an infrared sensing apparatus and a method for detecting an azimuthal angle of a static heat source or a movable heat source.

### 2. Description of Related Art

The conventional infrared sensing apparatus equipped with at least one infrared sensor is usually used to detect whether a heat source enters into the scanning area thereof or not. Specifically, the conventional infrared sensing apparatus cannot be used to detect whether the heat source remains in the scanning area or not, and the conventional infrared sensing apparatus cannot be used to detect an azimuthal angle of the heat source. Thus, how to use an infrared sensing apparatus to detect an azimuthal angle of a heat source is one of the objectives in this field. CN 104 280 A discloses an apparatus for detecting an azimuthal angle of a heat source, comprising: a controlling device, comprising: a circuit board; a micro-controller electrically connected to the circuit board; and a driving module electrically connected to the circuit board, wherein the driving module is electrically connected to the micro-controller via the circuit board; and a detecting device, comprising: a turntable connected to the driving module; a positioning member installed on the turntable and having a target positioning portion, wherein the driving module is configured to drive the positioning member to rotate along an axis; an infrared sensor electrically connected to the circuit board for receiving an infrared signal transmitted into the detecting device through the positioning member, wherein a signal strength defined by an infrared signal transmitted into the infrared sensor through the target positioning portion of the positioning member is different from a signal strength defined by an infrared signal transmitted into the infrared sensor through the other portion of the positioning member. Another device is known from KR 2009 0011921 A.

### SUMMARY OF THE INVENTION

According to the present invention, an apparatus as defined in claim 1 is provided. A method according to the present invention is defined by claim 4. The dependent claims show some examples of such an apparatus and method, respectively. The instant disclosure provides an apparatus and a method for detecting an azimuthal angle of a heat source for effectively solving a problem, which is an infrared sensing apparatus equipped with a single infrared sensor cannot be operated to detect an azimuthal angle of a heat source.

The instant disclosure provides an apparatus for detecting an azimuthal angle of a heat source, comprising: a controlling device, comprising: a circuit board; a micro-controller electrically connected to the circuit board; and a driving module electrically connected to the circuit board, wherein the driving module is electrically connected to the micro-controller via the circuit board; and a detecting device, comprising: a turntable connected to the driving module; a reference member disposed on the turntable; a positioning member installed on the turntable and having a target positioning portion, wherein the driving module is configured to drive the positioning member to rotate along an axis; an infrared sensor electrically connected to the circuit board for receiving an infrared signal transmitted into the detecting device through the positioning member, wherein a signal strength defined by an infrared signal transmitted into the infrared sensor through the target positioning portion of the positioning member is different from a signal strength defined by an infrared signal transmitted into the infrared sensor through the other portion of the positioning member; and an aligning member electrically connected to the controlling device, wherein the aligning member and the reference member co-define a starting time reference when the target positioning portion starts to rotate.

The instant disclosure also provides a method for detecting an azimuthal angle of a heat source, comprising: providing an infrared sensing apparatus, wherein the infrared sensing apparatus comprises a controlling device and a detecting device electrically connected to the controlling device, the detecting device comprises: a target positioning portion which is rotatable along an axis; an infrared sensor; and an aligning member electrically connected to the controlling device, wherein the aligning member defines a starting time reference when the target positioning portion starts to rotate; implementing a plurality of detecting steps by using the infrared sensing apparatus, wherein the detecting steps comprises: (a) operating the controlling device to detect a unit period (Tc) by using the aligning member, and then operating the controlling device to order the target positioning portion to stop and to align with the aligning member, wherein the unit period is defined by rotating the target positioning portion through one circle; (b) operating the infrared sensing apparatus to scan a scanning area; (c) when an external heat source entering into the scanning area is detected by the infrared sensing apparatus, operating the controlling device to drive the target positioning portion to rotate, and a judgment of the infrared sensing apparatus corresponding to the position of the external heat source comprising: defining a plane perpendicular to the axis as an azimuthal plane, wherein the axis is a central axis of the azimuthal plane, wherein at the azimuthal plane, the aligning member is orthogonally projected onto the azimuthal plane to define an initial azimuthal position, the axis and the initial azimuthal position co-define a first line connected there-between, and the first line is defined as 0° of the azimuthal plane; defining a time point (Ts) of the external heat source by mapping a particular time to the unit period, wherein an infrared signal emitted from the external heat source is transmitted into the infrared sensor through the target positioning portion at the particular time; defining a heat source position by orthogonally projecting the target positioning portion onto the azimuthal plane at the time point, wherein in the azimuthal plane, the axis and the heat source position co-define a second line connected there-between; and defining an angle between the first line and the second line as an azimuthal angle (θx) of the external heat source, wherein the azimuthal angle is obtained by using the controlling device to calculate an equation: θx = (Ts/Tc) × 360° ; and (d) when the external heat source leaving out the scanning area is detected by the infrared sensing apparatus, operating the controlling device to selectively order the target positioning portion to stop, and operating the controlling device to order the target positioning portion to align with the aligning member.

In summary, the infrared sensing apparatus and the method of the instant disclosure are provided to rapidly obtain the azimuthal angle of the external heat source at the time point by using the infrared sensor to receive the infrared signals, which are emitted from the external heat source with two kinds of signal strengths, and by using the cooperation of the aligning member and the target positioning portion.

In order to further appreciate the characteristics and technical contents of the instant invention, references are hereunder made to the detailed descriptions and appended drawings in connection with the instant invention. However, the appended drawings are merely shown for exemplary purposes, rather than being used to restrict the scope of the instant invention.

### BRIEF DESCRIPTION OF THE DRAWINGS

Fig. 1A is a perspective view showing an infrared sensing apparatus, which is applied to a method for detecting an azimuthal angle of a heat source, according to a first design not covered by the independent claims;
Fig. 1B is a perspective view showing an installation mode of the infrared sensing apparatus shown in Fig. 1A;
Fig. 1C is a flow chart showing the method of the instant disclosure;
Fig. 2 is an exploded view of the infrared sensing apparatus shown in Fig. 1A;
Fig. 3 is an exploded view of the infrared sensing apparatus shown in Fig. 1A from another perspective
Fig. 4 is an exploded view of a turntable and a positioning member, both shown in Fig. 2;
Fig. 5 is a top view of the positioning member shown in Fig. 4;
Fig. 6 is a cross-sectional view of the infrared sensing apparatus shown in Fig. 1A;
Fig. 7 is a perspective view showing a step (c) of the method according to the first design;
Fig. 8 is a first perspective view showing the operation of the infrared sensing apparatus in the step (c);
Fig. 9 is a second perspective view showing the operation of the infrared sensing apparatus in the step (c);
Fig. 10 is a perspective view showing a positioning member of the infrared sensing apparatus according to a second design not covered by the independent claims;
Fig. 11 is a perspective view showing the infrared sensing apparatus according to a design not covered by the independent claims;
Fig. 12 is a perspective view showing a positioning member and a focusing member of the infrared sensing apparatus shown in Fig. 11;
Fig. 13 is a perspective view showing a positioning member and a focusing member of the infrared sensing apparatus according to a fourth design not covered by the independent claims; and
Fig. 14 is a top view showing a positioning member of the infrared sensing apparatus according to an embodiment of the instant disclosure.

### DETAILED DESCRIPTION OF THE PREFERRED EMBODIMENTS

### [First Design]

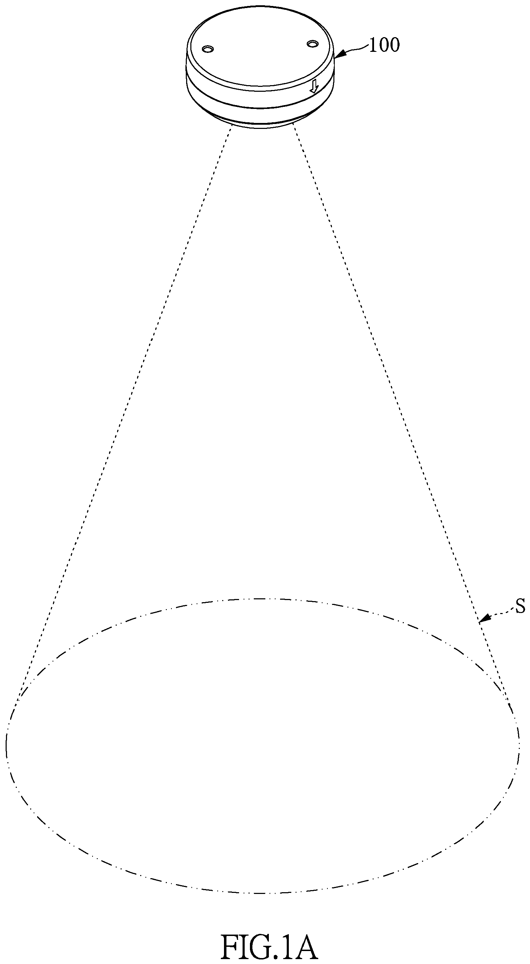

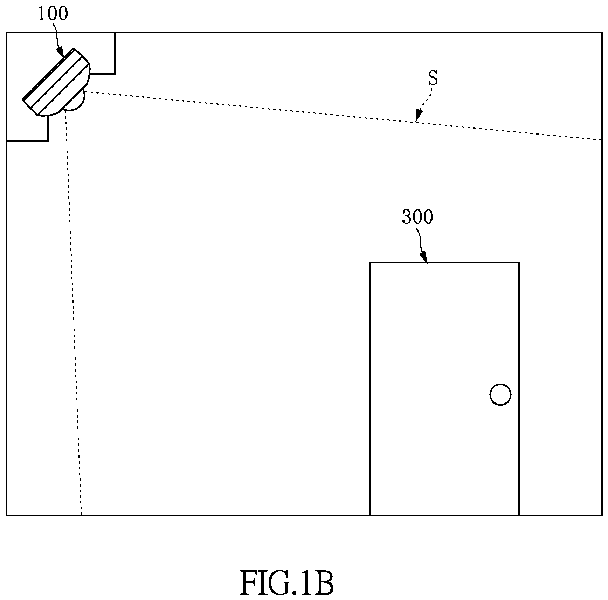

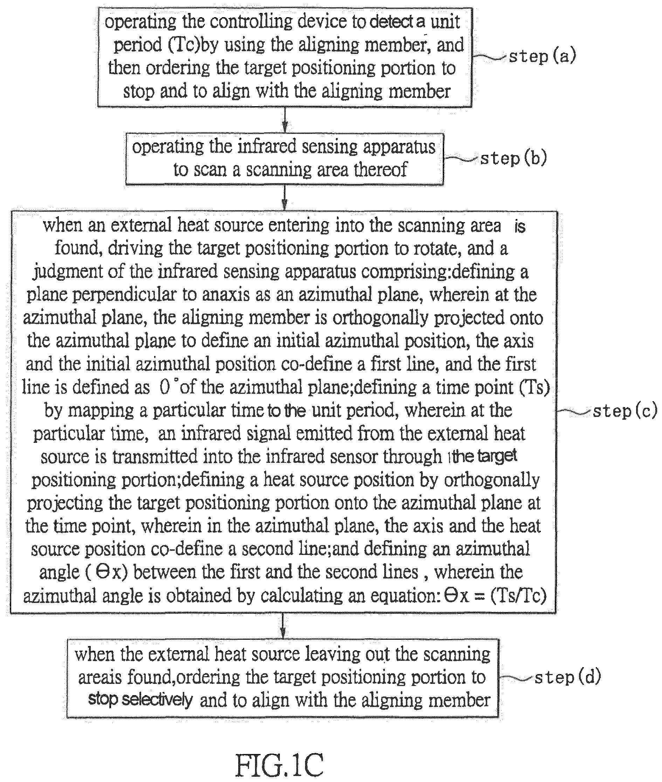

Please refer to Figs. 1 through 9, which show a first design of the instant disclosure. References are hereunder made to the detailed descriptions and appended drawings in connection with the instant invention. However, the appended drawings are merely shown for exemplary purposes, rather than being used to restrict the scope of the instant invention.

The instant design provides an apparatus 100 (i.e., an infrared sensing apparatus 100) and a method for detecting an azimuthal angle of a heat source, and the method in the instant design is implemented by using the infrared sensing apparatus 100. The infrared sensing apparatus 100 includes a case 3, a controlling device 1 arranged in the case 3, and a detecting device 2 arranged in the case 3 and electrically connected to the controlling device 1. The following description discloses each component of the infrared sensing apparatus 100, and then discloses the method.

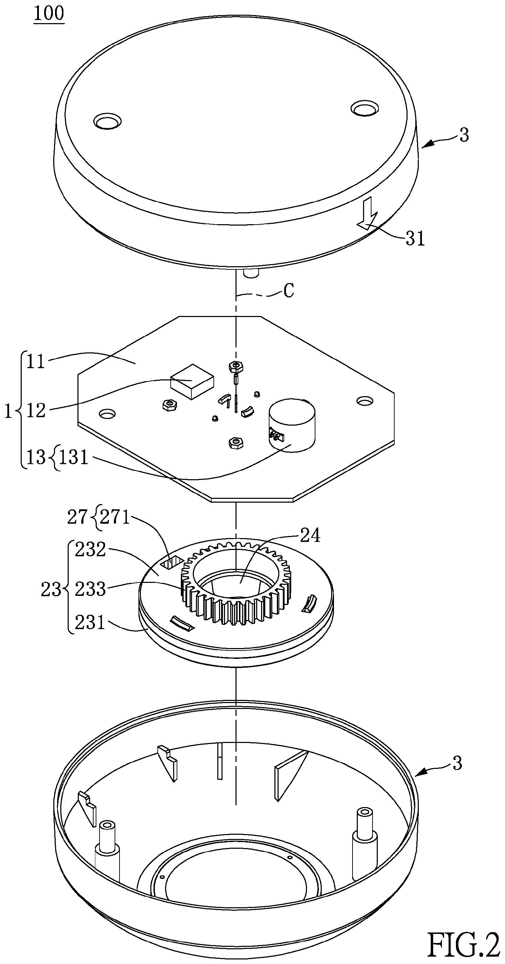

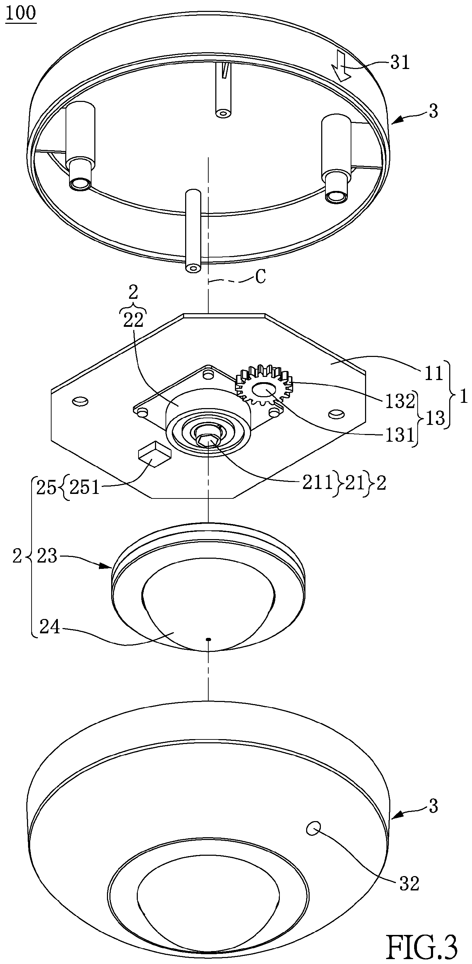

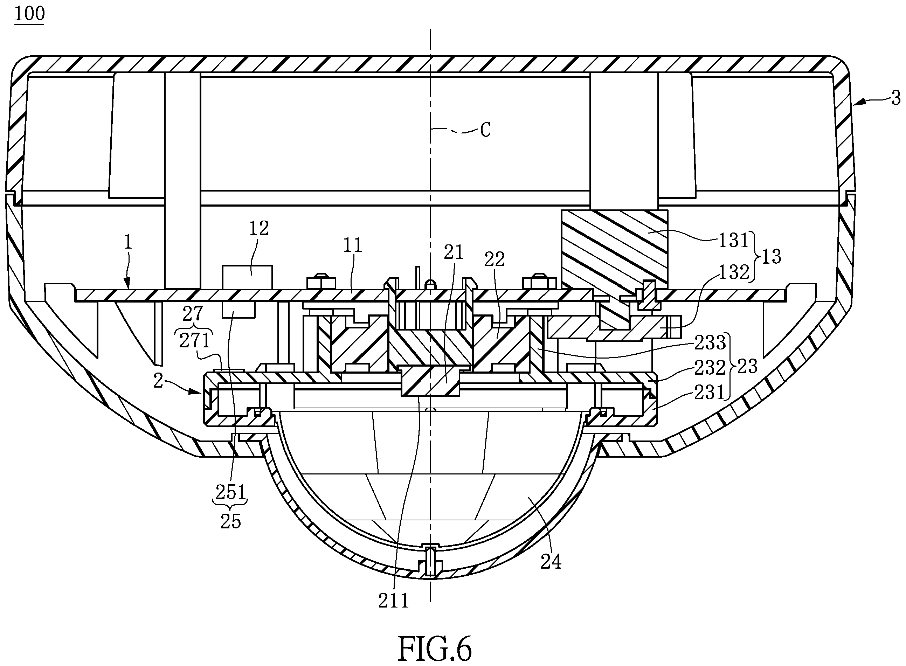

Please refer to Figs. 2 and 3, and with reference occasionally made to Fig. 6. The controlling device 1 includes a circuit board 11, a micro-controller 12 installed on the circuit board 11, and a driving module 13 installed on the circuit board 11 and electrically connected to the micro-controller 12. The micro-controller 12 is provided for controlling the operation of each component of the infrared sensing apparatus 100. The driving module 13 in the instant design includes a driving motor 131 and a driving gear 132 connected to the driving motor 131.

The detecting device 2 includes an infrared sensor 21 fixed on the circuit board 11, a bearing 22 sleeved at the infrared sensor 21, a turntable 23 installed on the bearing 22, a positioning member 24 disposed on the turntable 23, and an aligning member 25 electrically connected to the controlling device 1.

The infrared sensor 21 has a detecting surface 211 arranged away from the circuit board 11, and the infrared sensor 21 is electrically connected to the micro-controller 12 of the controlling device 1. Thus, a signal received by the detecting surface 211 of the infrared sensor 21 can be transmitted to the micro-controller 12 by the infrared sensor 21, such that the micro-controller 12 can emit an order according to the signal. Moreover, a central line of the infrared sensor 21 in the instant design is defined as an axis C, and the number of the infrared sensor 21 of the infrared sensing apparatus 100 in the instant design is only one. That is to say, the infrared sensing apparatus having at least two infrared sensors is not the preferred design of the instant disclosure. In addition, the infrared sensor 21 can be a pyroelectric infrared sensor or a thermal imaging sensor, and the accuracy of the infrared sensor 21 can be chosen according to the designer's demand.

The turntable 23 includes a first ring portion 231, a second ring portion 232 connected to the first ring portion 231, and a transmission gear 233 connected to the second ring portion 232. The maximum diameter of the first ring portion 231 is approximately identical to the maximum diameter of the second ring portion 232, and the maximum diameter of the transmission gear 233 is smaller than the maximum diameter of the second ring portion 232. The bearing 22 is inserted into the transmission gear 233, and the centers of the transmission gear 233 and the second ring portion 232 are located at the axis C. Moreover, the transmission gear 233 is engaged with the driving gear 132 of the driving module 13, so the driving module 13 can be operated to drive the turntable 23 to rotate along the axis C.

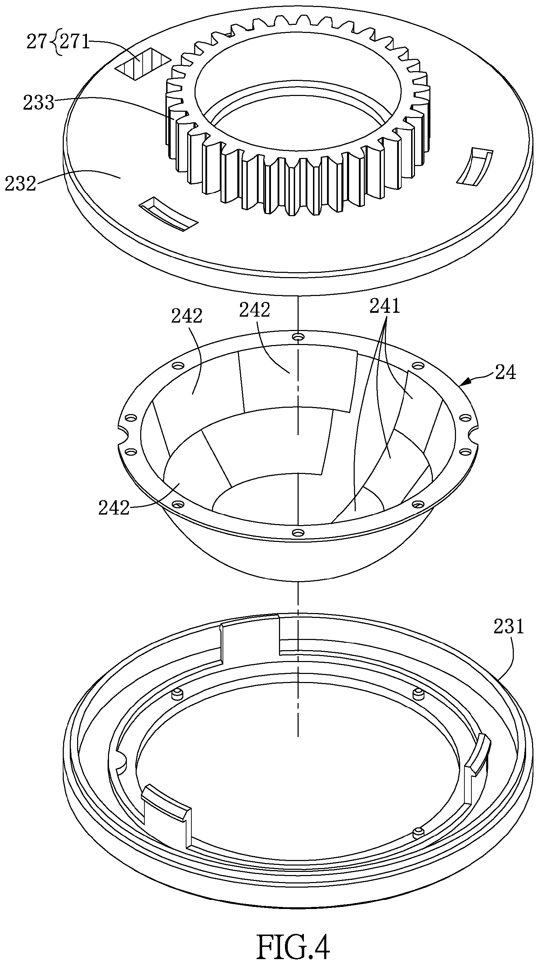

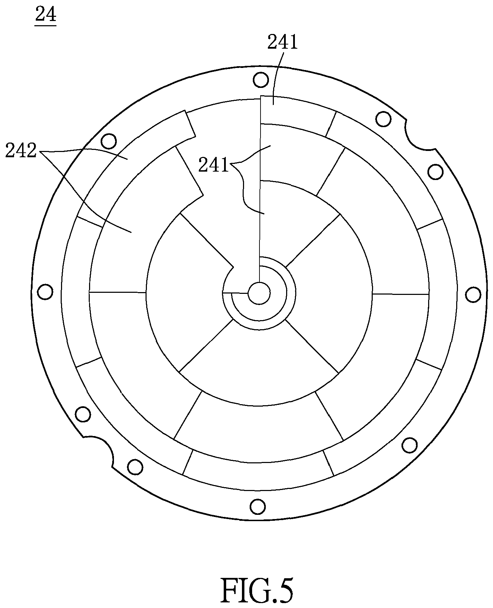

As shown in Figs. 4 and 5, the positioning member 24 has a hemispherical shell and a flange extended from an edge of the shell, the flange of the positioning member 24 is installed between the first ring portion 231 and the second ring portion 232 (i.e., the edge of the positioning member 24 is fixed on the first ring portion 231), and the shell of the positioning member 24 is arranged to protrude from the turntable 23. Thus, when the driving module 13 is operated to drive the turntable 23 to rotate, the turntable 23 brings the positioning member 24 to rotate along the axis C. Specifically, an outer surface of the positioning member 24 is a smooth surface, and an inner side of the positioning member 24 has a target positioning portion 241 and a plurality of condensing portions 242. The construction of the target positioning portion 241 is different from the construction of each one of the condensing portions 242. Each one of the condensing portions 242 is semi-transparent or non-transparent, and each one of the condensing portions 242 in the instant design is a single convex lens. The target positioning portion 241 in the instant design consists of a plurality of semi-convex lenses and a light-shielding construction connected to the semi-convex lenses. The hemispherical shell of the positioning member 24 is provided in order to detect at least half of an accommodating space. In other words, when the infrared sensing apparatus 100 is disposed on a wall in a cubic space, the infrared sensing apparatus 100 can be used to detect all of the cubic space.

Moreover, the condensing portions 242 and the target positioning portion 241 are provided with a focal point, and the focal point is located at the axis C and is located at the detecting surface 211 of the infrared sensor 21. Thus, because the construction of the target positioning portion 241 is different from the construction of each one of the condensing portions 242, a first signal strength defined by an infrared signal transmitted into the detecting surface 211 of the infrared sensor 21 through the target positioning portion 241 will be smaller than a second signal strength defined by an infrared signal transmitted into the detecting surface 211 of the infrared sensor 21 through any one of the condensing portions 242. In other words, an infrared signal transmitted into the detecting surface 211 of the infrared sensor 21 has two kinds of signal strengths by respectively passing through the target positioning portion 241 and any one of the condensing portions 242.

Specifically, because each condensing portion 242 in the instant design is a single convex lens, and the target positioning portion 241 in the instant design consists of the semi-convex lenses and the light-shielding construction, an infrared signal will be shielded by the light-shielding construction when the infrared signal passes through the target positioning portion 241, such that the first signal strength is approximately half of the second signal strength.

In summary, the positioning member 24 is provided with the hemispherical shell in order to arrange the detecting surface 211 of the infrared sensor 21 at the focal point of the positioning member 24, such that an external infrared signal existing outside of the infrared sensing apparatus 100 can focus on the detecting surface 211 of the infrared sensor 21 by passing through the hemispherical positioning member 24, thereby increasing a signal receiving area of the positioning member 24. That is to say, if any external infrared signal passes through the positioning member 24, the positioning member 24 will guide the external infrared signal to focus on the detecting surface 211 of the infrared sensor 21. Thus, the infrared sensor 21 can be provided with a broader receiving area by cooperating with the hemispherical positioning member 24.

In addition, the positioning member 24 in the instant design is provided to guide the external infrared signal to focus on the detecting surface 211 of the infrared sensor 21 by forming convex lenses and semi-convex lenses, but the construction of the positioning member 24 is not limited thereto. For example, the positioning member 24 can be provided with a reflecting lens (not shown) or a Fresnel's lens (not shown) to guide the external infrared signal to focus on the detecting surface 211 of the infrared sensor 21.

As shown in Fig. 6, the aligning member 25 is configured to calculate a unit period (Tc), and the unit period is defined by rotating the target positioning portion 241 of the positioning member 24 through one circle. In other words, the aligning member 25 is used to define a starting time reference when the positioning member 24 starts to rotate. The aligning member 25 in the instant design includes an optical receiver 251 installed on the circuit board 11 and electrically connected to the micro-controller 12. A reference member 27 is disposed on the second ring portion 232 of the turntable 23, and the position of the reference member 27 corresponds to the position of the target positioning portion 241. The reference member 27 in the instant design is a reflecting sheet 271, and the optical receiver 251 can be operated to receive an optical signal reflected from the reflecting sheet 271 when the reflecting sheet 271 is facing to the optical receiver 251. Thus, after the reflecting sheet 271 (or the target positioning portion 241) is aligned with the optical receiver 251, when the turntable 23 is rotated through one circle to cause the optical receiver 251 to get an optical signal reflected from the reflecting sheet 271, the micro-controller 12 can obtain the unit period (Tc) by getting a signal transmitted from the optical receiver 251. Moreover, the reflecting sheet 271 is configured to be a reference when the positioning member 24 starts to rotate. In other words, when the positioning member 24 is rotated through one circle, the reflecting sheet 271 presents a position about 0° and a position about 360°, which are overlapped. Thus, the reference member 27 can be further provided with a plurality of reflecting sheets 271 to respectively present a position about 90°, a position about 180°, and a position about 270°, thereby increasing the accuracy of the infrared sensing apparatus 100.

In addition, in the instant design, the reference member 27 is the reflecting sheet 271 for example, and the optical receiver 251 of the aligning member 25 is cooperated with the reflecting sheet 271 to provide a starting time reference when the positioning member 24 starts to rotate, but the aligning member 25 is not limited to the optical receiver 251. For example, in a non-shown design, the aligning member 25 can be an inching switch to cooperate with a bump, which is disposed on the second ring portion 232 (e.g., the bump is regarded as the reference member 27), thereby providing a starting time reference when the positioning member 24 starts to rotate; or, the aligning member 25 can be an optical isolator to cooperate with a shielding structure, which is disposed on the second ring portion 232 (e.g., the shielding structure is regarded as the reference member 27), thereby providing a starting time reference when the positioning member 24 starts to rotate.

The infrared sensing apparatus 100 has been disclosed in the above description, and the following description discloses the method of the instant disclosure for detecting an azimuthal angle of a heat source (as shown in Fig. 1C and Figs. 7 through 9).

The infrared sensing apparatus 100 is provided for the method, and the construction of the infrared sensing apparatus 100 is not disclosed again. When any component of the infrared sensing apparatus 100 is disclosed in the following description, please refer to the above description and the corresponding figures.

Step (a): the micro-controller 12 of the controlling device 1 is operated to order the driving module 13 to rotate the turntable 23 and the positioning member 24 (e.g., the target positioning portion 241) disposed on the turntable 23, and the controlling device 1 is operated to detect a unit period (Tc), which is defined by rotating the target positioning portion 241 through one circle, by using the aligning member 25, and the controlling device 1 is operated to record a situation about a transient heat source in a scanning area S of the infrared sensing apparatus 100. The controlling device 1 is operated to compare the situation and an ambient temperature defined by a predetermined parameter, if no external heat source 200 exists in the scanning area S, the infrared sensing apparatus 100 is operated to update the situation, which will be a reference for comparing with a next situation, and then the infrared sensing apparatus 100 is in a standby state; or if at least one external heat source 200 exists in the scanning area S, the step (c) is implemented. Specifically, when the infrared sensing apparatus 100 is in the standby state, the controlling device 1 is operated to order the turntable 23 and the positioning member 24 (e.g., the target positioning portion 241) disposed on the turntable 23 to stop and to align with the aligning member 25.

Moreover, when the infrared sensing apparatus 100 is arranged in an environment with at least one gateway 300 (as shown in Fig. IB), the gateway 300 is regarded as a generating area of an external heat source 200. Accordingly, when the infrared sensing apparatus 100 is in the standby state, the scanning area S of the infrared sensing apparatus 100 preferably covers the gateway 300, and the light-shielding construction of the target positioning portion 241 does not face toward the gateway 300, thereby avoiding the light-shielding construction from shielding an infrared signal, which is emitted from an external heat source that appears at the gateway 300. Thus, the above arrangement of the infrared sensing apparatus 100 can increase a reaction rate of detection of an external heat source 200.

A direction label 31 can be disposed on a portion of the case 3, and the position of the direction label 31 corresponds to the position of the light-shielding construction of the target positioning portion 241. Thus, if the infrared sensing apparatus 100 is used, a user can easily arrange the infrared sensing apparatus 100 at a suitable position for detection, that is to say, a desired scanning area of the user can easily match the scanning area S of the infrared sensing apparatus 100. Moreover, the arrangement, where the light-shielding construction of the target positioning portion 241 does not face toward the gateway 300, can be achieved by using the direction label 31.

Step (b): the infrared sensing apparatus 100 being in the standby state is uninterruptably operated to detect an external heat source, and the positioning member 24 does not rotate. It should be noted that the scanning area S of the infrared sensing apparatus 100 as shown in the figures is one example, but the scanning area S of the infrared sensing apparatus 100 in the instant disclosure is not limited thereto.

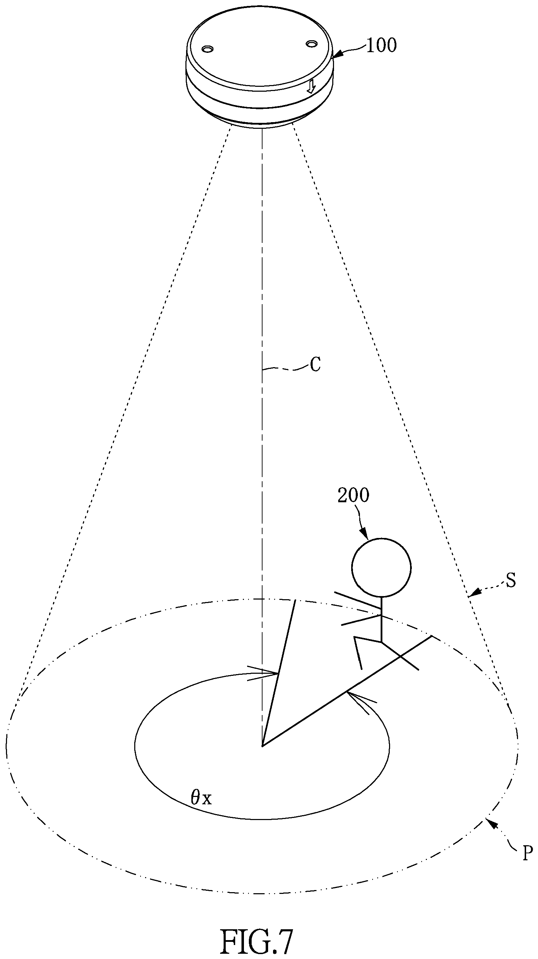

Step (c): when an external heat source 200 (i.e., a person) entering into the scanning area S (as shown in Fig. 7) is detected by the infrared sensing apparatus 100, the infrared sensing apparatus 100 is operated to judge a position of the external heat source 200, and the controlling device 1 is operated to selectively emit an electrical signal to control an external device (e.g., an alarm device or a heat dissipating device). In practical use, when an external heat source 200 (i.e., a person) entering into the scanning area S is detected by the infrared sensing apparatus 100, the infrared sensing apparatus 100 is operated to detect a temperature of the surrounding environment, and the infrared sensing apparatus 100 is operated to order the heat dissipating device (not shown) to be in a standby state if the temperature of the surrounding environment is higher than 30°C.

In the instant design, an external heat source 200 entering into the scanning area S is judged according to a signal strength received by the infrared sensor 21. Specifically, if a distribution of the signal strength received by the infrared sensor 21 is different from the updated situation disclosed in the step (a), the micro-controller 12 judges that an external heat source 200 has entered into the scanning area S of the infrared sensing apparatus 100.

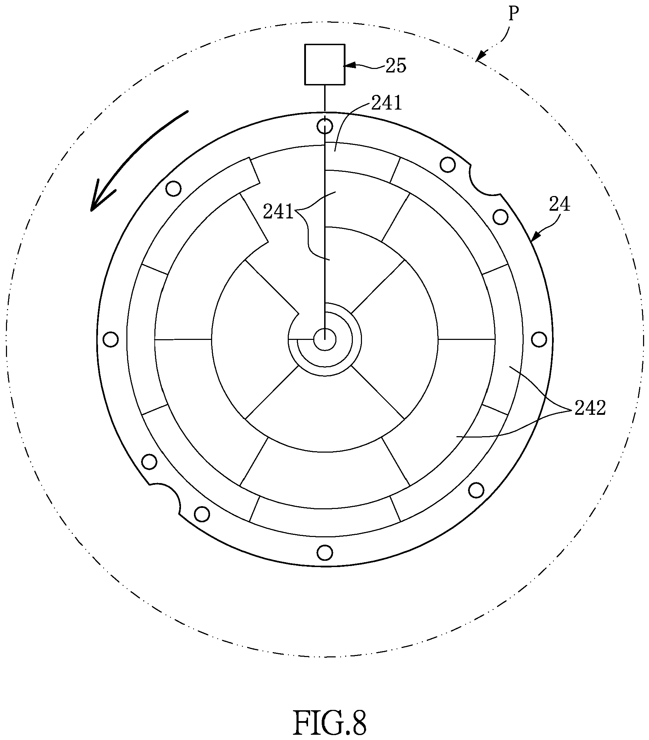

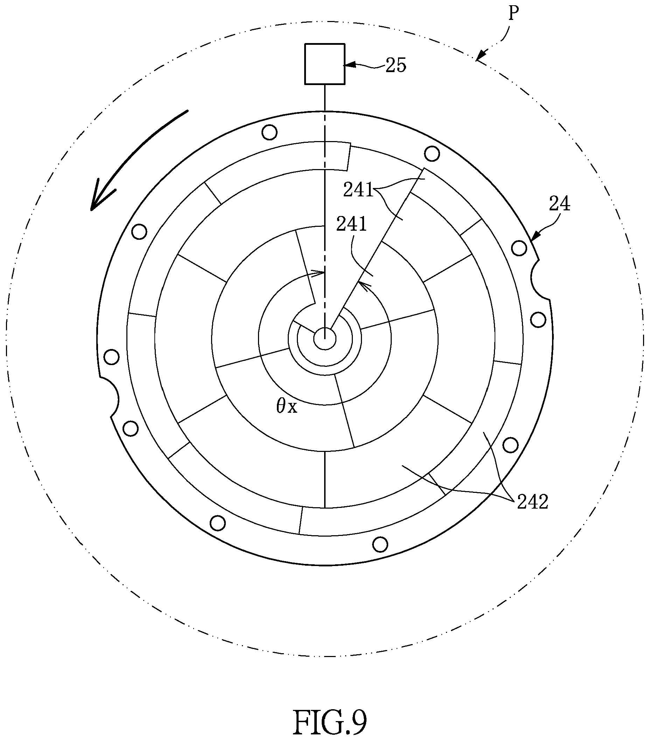

Moreover, the judgment of the infrared sensing apparatus 100 corresponding to the position of the external heat source 200 comprises: the micro-controller 12 of the controlling device 1 is operated to order the driving module 13 to rotate the turntable 23 and the positioning member 24 (e.g., the target positioning portion 241) disposed on the turntable 23 (as shown in Figs. 8 and 9). During the rotation of the target positioning portion 241, the rotating rate of the target positioning portion 241 is controlled to be smaller than a signal receiving frequency of the infrared sensor 21, thereby avoiding a position offset problem or a signal weak problem occurring to the infrared sensor 21. In the instant design, the controlling device 1 is operated to control the target positioning portion 241 to rotate through one circle in twenty seconds, but it is not limited thereto. In addition, when the controlling device 1 is operated to drive the positioning member 24 to rotate, the infrared sensor 21 receives a plurality of infrared signals emitted from the external heat source 200 with two kinds of signal strengths. Specifically, one of the signal strengths defined by an infrared signal transmitted onto the detecting surface 211 of the infrared sensor 21 through the target positioning portion 241 is smaller than the other signal strength defined by an infrared signal transmitted onto the detecting surface 211 of the infrared sensor 21 through any one of the condensing portions 242.

The judgment of the infrared sensing apparatus 100 corresponding to the position of the external heat source 200 is further disclosed as follows. A plane (e.g., ground) perpendicular to the axis C is defined as an azimuthal plane P, and the axis C is a central axis of the azimuthal plane P. At the azimuthal plane P, the aligning member 25 is orthogonally projected onto the azimuthal plane P to define an initial azimuthal position, and the axis C and the initial azimuthal position co-define a first line connected there-between. The first line is defined as 0° of the azimuthal plane P.

An infrared signal emitted from the external heat source 200 is transmitted onto the detecting surface 211 of the infrared sensor 21 through the target positioning portion 241 at a particular time, the particular time maps to the unit period (Tc) to define a time point (Ts) of the external heat source 200. That is to say, before the time point (Ts), any infrared signal, which is emitted from the external heat source 200, transmitted onto the detecting surface 211 of the infrared sensor 21 does not pass through the target positioning portion 241.

The target positioning portion 241 is orthogonally projected onto the azimuthal plane P at the time point to define a heat source position. At the azimuthal plane P, the axis C and the heat source position co-define a second line connected there-between, and an angle between the first line and the second line is defined as an azimuthal angle (θx) of the external heat source 200. The azimuthal angle is obtained by using the micro-controller 12 of the controlling device 1 to calculate an equation: θx = (Ts/Tc) × 360°. Moreover, when the azimuthal angle is obtained, the controlling device 1 is operated to selectively emit an electrical signal to control an external device. In practical use, if the external heat source 200 (i.e., person) is located at a position for more than a predetermined time, the infrared sensing apparatus 100 is operated to start a heat dissipating device corresponding to the position of the external heat source 200.

Step (d): when the fact that the external heat source 200 has left out of the scanning area S is detected by the infrared sensing apparatus 100, the infrared sensing apparatus 100 is operated to update the situation about the transient heat source, and then the infrared sensing apparatus 100 is in the standby state. Specifically, when the infrared sensing apparatus 100 is in the standby state, the controlling device 1 is operated to order the turntable 23 and the positioning member 24 (e.g., the target positioning portion 241) disposed on the turntable 23 to stop and to align with the aligning member 25. Moreover, when the fact that the external heat source 200 has left out of the scanning area S is detected by the infrared sensing apparatus 100, the controlling device 1 is operated to selectively emit an electrical signal to control an external device. In practical use, if the external heat source 200 (e.g., person) leaves the scanning area S of the infrared sensing apparatus 100, the infrared sensing apparatus 100 is operated to stop a heat dissipating device arranged in the scanning area S.

In the instant design, an external heat source 200 leaving the scanning area S is judged according to a signal strength received by the infrared sensor 21. Specifically, if a distribution of the signal strength received by the infrared sensor 21 is identical to the updated situation disclosed in the step (a), the micro-controller 12 judges that an external heat source 200 has left the scanning area S of the infrared sensing apparatus 100.

In summary, the infrared sensing apparatus 100 and the method the instant design are provided to rapidly obtain the azimuthal angle of the external heat source 200 at a time point by using the infrared sensor 21 to receive the infrared signals, which are emitted from the external heat source 200 with two kinds of signal strengths, and using the cooperation of the aligning member 25 and the target positioning portion 241.

Moreover, the updated situation disclosed in the step (a), which is obtained by using the single infrared sensor 21, is provided to be a reference for judging that an external heat source 200 enters into or leaves out of the scanning area S of the infrared sensing apparatus 100, so if an external heat source 200 exists in the scanning area S, the infrared sensing apparatus 100 can rapidly know. Accordingly, the infrared sensing apparatus 100 and the method of the instant design can be used to detect an azimuthal angle of a static heat source or a movable heat source.

In the detecting steps (a)∼(d), the target positioning portion 241 remains to rotate after being driven until the infrared sensing apparatus 100 is closed. That is to say, when the infrared sensing apparatus 100 is in the standby state, the controlling device 1 is operated to still order the turntable 23 and the positioning member 24 (e.g., the target positioning portion 241) disposed on the turntable 23 to rotate, thereby increasing the reaction rate of detection of an external heat source 200 and updating the situation about transient heat source as soon as possible.

It should be noted that each step in the instant design does not define a specific unit of the unit period (Tc), that is to say, the unit of the unit period (Tc) can be adjusted according to the designer's demand. The following description discloses two examples. First example: in the step (a), the target positioning portion 241 needs M seconds to rotate through one circle, and M seconds is defined as the unit period (Tc); in the step (c), the time point of the external heat source is an Nth seconds of the M seconds, and the equation becomes: θx = (N/ M) × 360°. Second example: in the detecting step (a), the infrared sensor 21 is operated to receive a plurality of clocks when the target positioning portion 241 is rotated through one circle, each clock is defined by an external signal being transmitted into the infrared sensor 21 through the target positioning portion 241, and the number of the clocks is R and is defined as the unit period (Tc); in the step (c), the time point of the external heat source is a Q^{th} clock of the clocks, and the equation becomes: θx = (Q/R) × 360°.

In addition, the construction of the infrared sensing apparatus 100 is disclosed for clearly understanding the method of the instant design, but the method of the instant design is not limited to the construction of the infrared sensing apparatus 100.

### [Second Design]

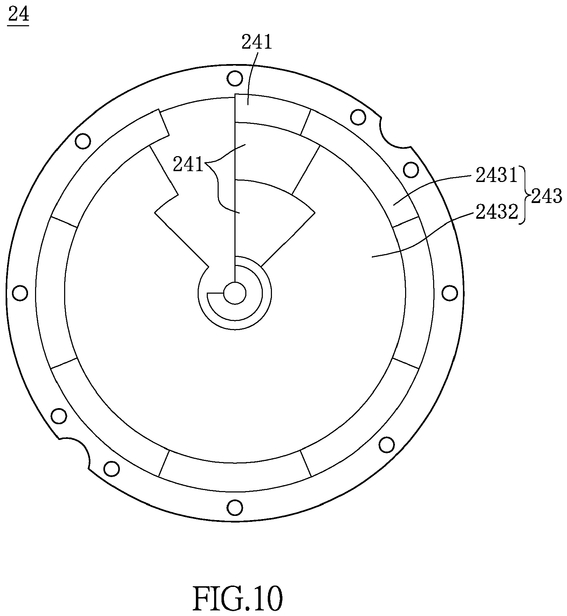

Please refer to the Fig. 10, which shows a second design of the instant disclosure. The second design is similar to the first design, so the same features are not disclosed again. The main different features of the two designs is disclosed as follows.

The inner side of the positioning member 24 has a target positioning portion 241 and a surrounding portion 243 arranged around the target positioning portion 241. The construction of the target positioning portion 241 is different from the construction of the surrounding portion 243 for causing a signal strength defined by an infrared signal transmitted into the infrared sensor 21 through the target positioning portion 241 to be larger than a signal strength defined by an infrared signal transmitted into the infrared sensor 21 through the surrounding portion 243.

Specifically, the target positioning portion 241 can be semi-transparent or non-transparent, and the target positioning portion 241 in the instant design consists of a plurality of semi-convex lenses and a light-shielding construction connected to the semi-convex lenses. The surrounding portion 243 in the instant design consists of a C-shaped condensing segment 2431 arranged on the outermost of the positioning member 24 and a shielding segment 2432 arranged inside the condensing segment 2431. The condensing segment 2431 consists of a plurality of convex lenses arranged in sequence, and two ends of the condensing segment 2431 are connected to an outermost part of the target positioning portion 241, such that the condensing segment 2431 is configured to detect whether an external heat source 200 enters into the scanning area S or not. Moreover, the target positioning portion 241 is provided with a focal point located at the detecting surface 211 of the infrared sensor 21.

In the step (c), when the controlling device 1 is operated to drive the positioning member 24 to rotate, the infrared sensor 21 receives a plurality of infrared signals emitted from the external heat source 200 with at least two kinds of signal strengths. Specifically, one of the signal strengths defined by an infrared signal transmitted into the infrared sensor 21 through the target positioning portion 241 is different from the other signal strength defined by an infrared signal transmitted into the infrared sensor 21 through the surrounding portion 243. Specifically, in the instant design, an infrared signal emitted from an external heat source 200 can be transmitted into the infrared sensor 21 only by passing through the target positioning portion 241 and the condensing segment 2431, that is to say, an infrared signal emitted from an external heat source 200 cannot be transmitted into the infrared sensor 21 by passing through the shielding segment 2432. In practical use, the infrared sensing apparatus 100 in the instant design takes the positioning member 24 to detect an azimuthal of an heat source, and the infrared sensing apparatus 100 is operated to record a complete signal data when the controlling device 1 is operated to drive the positioning member 24 to rotate through one circle, a largest amplitude of the complete signal data in the unit period (Tc) is defined as a time point (Ts) to calculate the azimuthal angle.

### [Third Design]

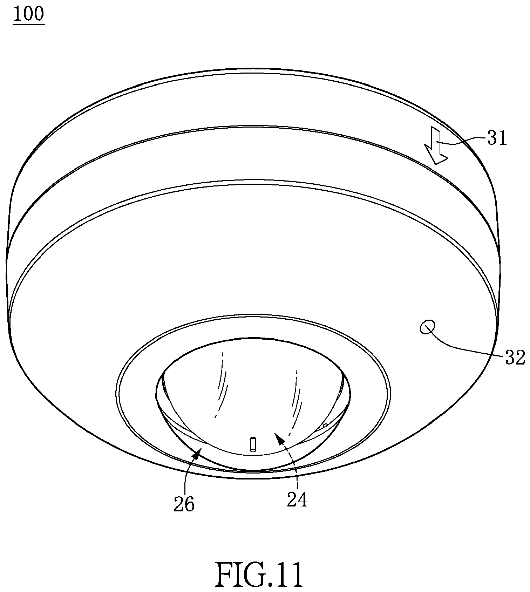

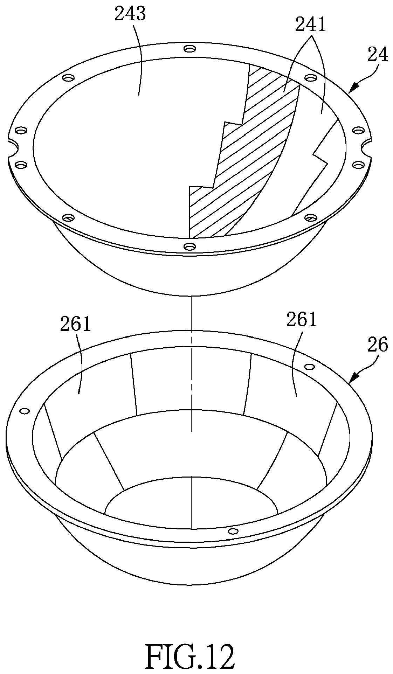

Please refer to the Figs. 11 and 12, which show a third design of the instant disclosure. The third design is similar to the second design, so the same features are not disclosed again. The main different feature of the two designs is the positioning member 24 of the detecting device 2 and the infrared sensing apparatus 100 of the instant design further includes a focusing member 26 corresponding to the positioning member 24, and the different feature is disclosed as follows.

The focusing member 26 is installed on the case 3 to cover the positioning member 24. The focusing member 26 has a plurality of condensing portions 261, and the positioning member 24 has a target positioning portion 241 and a surrounding portion 243 arranged around the target positioning portion 241. Each one of the condensing portions 261 in the instant design is a single convex lens. The construction of the target positioning portion 241 is different from the construction of the surrounding portion 243 for causing a signal strength defined by an infrared signal transmitted into the infrared sensor 21 through the target positioning portion 241 and one of the condensing portions 261 to be smaller than a signal strength defined by an infrared signal transmitted into the infrared sensor 21 through the surrounding portion 243 and one of the condensing portions 261.

Specifically, the target positioning portion 241 can be semi-transparent or non-transparent, and the target positioning portion 241 in the instant design is a semi-transparent construction (e.g., semi-convex lens) for shielding part of the condensing portion 261. The surrounding portion 243 in the instant design is a transparent construction. Moreover, the condensing portions 261 are provided with a focal point, and the focal point is located at the infrared sensor 21.

In the step (c), when the controlling device 1 is operated to drive the positioning member 24 to rotate, the infrared sensor 21 receives a plurality of infrared signals emitted from the external heat source 200 with two kinds of signal strengths. Specifically, one of the signal strengths defined by an infrared signal transmitted into the infrared sensor 21 through the target positioning portion 241 and one of the condensing portions 261 is smaller than the other signal strength defined by an infrared signal transmitted into the infrared sensor 21 through the surrounding portion 243 and one of the condensing portions 261. Specifically, in the instant design, after an infrared signal emitted from an external heat source 200 passes through one of the condensing portions 261 of the focusing member 26, half of the infrared signal will be shielded by the target positioning portion 241 if the infrared signal is transmitted toward the target positioning portion 241, and the infrared signal will directly pass through the surrounding portion 243 if the infrared signal is transmitted toward the surrounding portion 243, thereby causing two kinds of signal strength.

Accordingly, the advantage of the infrared sensing apparatus 100 of the instant design is that it is provided with the un-rotated focusing member 26, so that the infrared sensor 21 can be operated to receive an infrared signal in a more stable condition.

### [Fourth Design]

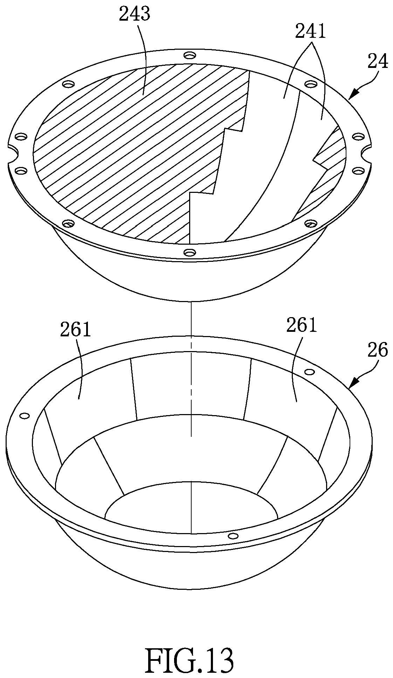

Please refer to the Fig. 13, which shows a fourth design of the instant disclosure. The fourth design is similar to the third design, so the same features are not disclosed again. The main different feature of the two designs is the target positioning portion 241 in the instant design is a hollow or a transparent construction and the surrounding portion 243 in the instant design is a semi-transparent construction, and the different feature is disclosed as follows.

An infrared signal can be entirely transmitted into the infrared sensor 21 through any one of the condensing portions 261 and the target positioning portion 241 by using a hollow or a transparent target positioning portion 241. Moreover, the surrounding portion 243 is provided with a semi-transparent construction for causing a signal strength defined by an infrared signal transmitted into the infrared sensor 21 through the target positioning portion 241 and one of the condensing portions 261 to be larger than a signal strength defined by an infrared signal transmitted into the infrared sensor 21 through the surrounding portion 243 and one of the condensing portions 261.

Thus, in practical use, when an external heat source 200 enters into the scanning area S of the infrared sensing apparatus 100 of the instant design, an infrared signal received by the infrared sensor 21 has a smaller signal strength if the infrared signal passes through the surrounding portion 243, but the controlling device 1 can be operated to recognize the smaller signal strength for rotating the positioning member 24, and the controlling device 1 can be operated to track the external heat source 200 by using the target positioning portion 241.

In addition, the advantage of the instant design includes: the infrared sensing apparatus 100 can be operated to precisely judge a plurality of azimuthal angles of external heat sources 200 or can be operated to further detect the strength of each external heat source 200. Specifically, the infrared sensing apparatus 100 can be operated to judge an azimuthal angle of an external heat source, which is in a static mode or a moving mode, or the infrared sensing apparatus 100 can be operated to judge strength of an external heat source 200 according to amplitude of an infrared signal emitted from the external heat source 200.

In the above designs, the infrared signal transmitted into the infrared sensor 21 needs to pass through the positioning member 24, and the positioning member 24 is provided with the target positioning portion 241 for tracking and positioning an external heat source 200. Moreover, the positioning member 24 is also provided with the surrounding portion 243 in the third and fourth designs, the condensing segment 2431 in the second design, or the condensing portion 242 in the first design so as to transmit an infrared signal, which is emitted from an external heat source 200 that exists in the scanning area S, into the infrared sensor 21 and then to start the judgment of the infrared sensing apparatus 100 of the step (c). In practical use, the infrared sensing apparatus 100 can be provided with a detecting member 32 electrically connected to the controlling device 1. The detecting member 32 is configured to achieve a specific detecting condition (e.g., detecting angle) for preventing a misjudgment from occurring, thereby precisely detecting whether an external heat source 200 enters into the scanning area S or not. A detecting medium of the detecting member 32 can be infrared light, ultrasound, or visible light, but is not limited thereto.

### [Embodiment]

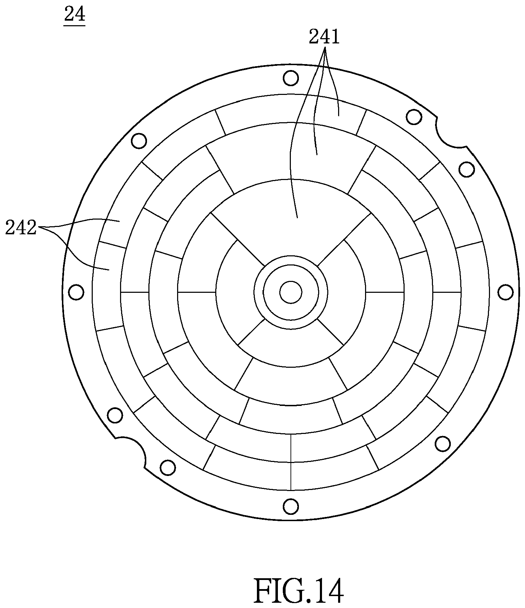

Please refer to the Fig. 14, which shows an embodiment of the instant disclosure. The embodiment is similar to the third design, so the same features are not disclosed again. The main different feature of the two embodiments is the positioning member 24, and the different feature is disclosed as follows.

The positioning member 24 in the instant embodiment has a target positioning portion 241 and a plurality of condensing portions 242 arranged around the target positioning portion 241. The target positioning portion 241 consists of a plurality of convex lens arranged side by side, and each condensing portion 242 is a convex lens. Moreover, the size of each condensing portion 242 is smaller than the size of each convex lens of the target positioning portion 241, the condensing portions 242 are assembled to be a plurality of stacked C-shaped constructions, and the ends of the C-shaped constructions are connected to two opposite edges of the target positioning portion 241. The number of convex lens of each C-shaped construction is greater than the number of convex lens of the target positioning portion 241.

Accordingly, the positioning member 24 in the instant embodiment is provided for causing a signal strength defined by an infrared signal transmitted into the infrared sensor 21 through the target positioning portion 241 to be greater than a signal strength defined by an infrared signal transmitted into the infrared sensor 21 through any one of the condensing portion 242.

### [The possible effect of the instant disclosure]

In summary, the infrared sensing apparatus and the method of the instant disclosure are provided to rapidly obtain an azimuthal angle of an external heat source at a time point by using the infrared sensor to receive the infrared signals, which are emitted from the external heat source with two kinds of signal strengths, and by using the cooperation of the aligning member and the target positioning portion.

Moreover, the updated situation disclosed in the step (a), which is obtained by only a single infrared sensor, is provided to be a reference for judging that an external heat source enters into or leaves out of the scanning area of the infrared sensing apparatus, so if an external heat source exists in the scanning area, the infrared sensing apparatus can rapidly know. Accordingly, the infrared sensing apparatus and the method of the instant disclosure can be used to detect an azimuthal angle of a static heat source or a movable heat source and further be used to emit a signal to stop an external device, such as lamp, electric fan, or alarm voice, and so on.

The hemispherical positioning member of the instant disclosure is provided to guide an external infrared signal to focus on the detecting surface of the infrared sensor if any external infrared signal passes through the positioning member, thus the infrared sensor can have a broader receiving area by cooperating with the hemispherical positioning member, and the hemispherical positioning member is provided without affecting the appearance of infrared sensing apparatus.

In addition, the infrared sensing apparatus and the method of the instant disclosure can be operated without rotating the infrared sensor for decreasing noise, which is generated from signal transmission. The infrared sensing apparatus can be provided with the bearing arranged between on the infrared sensor and the turntable to reduce friction of the turntable, thereby reducing energy waste from driving the infrared sensing apparatus, increasing stability of the infrared sensor for receiving an infrared signal, and effectively increasing the using life of the infrared sensing apparatus.

The descriptions illustrated *supra* set forth simply the preferred embodiments of the instant invention; however, the characteristics of the instant invention are by no means restricted thereto. All changes, alterations, or modifications conveniently considered by those skilled in the art are deemed to be encompassed within the scope of the instant invention delineated by the following claims.

## Claims

1. An apparatus (100) for detecting an azimuthal angle of a heat source, comprising:
a controlling device (1), comprising:
a circuit board (11);
a micro-controller (12) electrically connected to the circuit board (11); and
a driving module (13) electrically connected to the circuit board (11),
wherein the driving module (13) is electrically connected to the micro-controller (12) via the circuit board (11); and
a detecting device (2), comprising:
a turntable (23) connected to the driving module (13);
a reference member (27) disposed on the turntable (23);
a positioning member (24) installed on the turntable (23) and having a target positioning portion (241), wherein the driving module (13) is configured to drive the positioning member (24) to rotate along an axis (C);
an infrared sensor (21) electrically connected to the circuit board (11) for receiving an infrared signal transmitted into the detecting device (2) through the positioning member (24), wherein a signal strength defined by an infrared signal transmitted into the infrared sensor (21) through the target positioning portion (241) of the positioning member (24) is different from a signal strength defined by an infrared signal transmitted into the infrared sensor (21) through the other portion of the positioning member (24); and
an aligning member (25) electrically connected to the controlling device (1), wherein the aligning member (25) and the reference member (27) co-define a starting time reference when the target positioning portion (241) starts to rotate;
**characterized in that**:
the positioning member (24) further has a plurality of condensing portions (242) arranged around the target positioning portion (241), the target positioning portion (241) has a plurality of convex lens arranged side by side, and each condensing portion (242) is a convex lens, the size of each condensing portion (242) is smaller than the size of each convex lens of the target positioning portion (241), the condensing portions (242) are assembled to be a plurality of stacked C-shaped constructions, and the ends of the C-shaped constructions are connected to two opposite edges of the target positioning portion (241), and the number of convex lens of each C-shaped construction is greater than the number of convex lens of the target positioning portion (241).

2. The apparatus as claimed in claim 1, further comprising a detecting member (32), the apparatus defining a scanning area (S), wherein the controlling device (1) is electrically connected to the detecting member (32) for detecting whether an external heat source (200) enters into or leaves out the scanning area (S).

3. The apparatus as claimed in claim 1, further comprising a case (3), wherein the case (3) has a direction label (31) for arranging a detecting direction of the apparatus during an installation of the apparatus.

4. A method for detecting an azimuthal angle of a heat source, comprising:
providing an infrared sensing apparatus (100), wherein the infrared sensing apparatus (100) comprises a controlling device (1) and a detecting device (2) electrically connected to the controlling device (1), the detecting device (2) comprises:
a target positioning portion (241) which is rotatable along an axis (C);
an infrared sensor (21); and
an aligning member (25) electrically connected to the controlling device (1), wherein the aligning member (25) defines a starting time reference when the target positioning portion (241) starts to rotate;
implementing a plurality of detecting steps by using the infrared sensing apparatus (100), wherein the method for dectecting an azimuthal angle of a heat source is **characterized in that** the detecting steps comprising:
a) operating the controlling device (1) to detect a unit period (Tc) by using the aligning member (25), and then operating the controlling device (1) to order the target positioning portion (241) to stop and to align with the aligning member (25), wherein the unit period is defined by rotating the target positioning portion (241) through one circle, and operating the infrared sensing apparatus (100) to record a situation of a transient heat source in a scanning area (S);
b) operating the infrared sensing apparatus (100) to scan a scanning area (S), and the infrared sensing apparatus (100) is operated to update the situation of the transient heat source in the scanning area (S);
c) if a distribution of the signal strength received by the infrared sensing apparatus (100) is different from the update situation of the transient heat source, the controlling device (1) judges that an external heat source (200) has entered into the scanning area (S);
when the external heat source (200) entering into the scanning area (S) is detected by the infrared sensing apparatus (100), operating the controlling device (1) to drive the target positioning portion (241) to rotate, and a judgment of the infrared sensing apparatus (100) corresponding to the position of the external heat source (200) comprising:
defining a plane perpendicular to the axis (C) as an azimuthal plane (P), wherein the axis (C) is a central axis (C) of the azimuthal plane (P), wherein at the azimuthal plane (P), the aligning member (25) is orthogonally projected onto the azimuthal plane (P) to define an initial azimuthal position, the axis (C) and the initial azimuthal position co-define a first line connected there-between, and the first line is defined as 0° of the azimuthal plane (P);
defining a time point (Ts) of the external heat source (200) by mapping a particular time to the unit period, wherein an infrared signal emitted from the external heat source (200) is transmitted into the infrared sensor (21) through the target positioning portion (241) at the particular time;
defining a heat source position by orthogonally projecting the target positioning portion (241) onto the azimuthal plane (P) at the time point,
wherein in the azimuthal plane (P), the axis (C) and the heat source position co-define a second line connected there-between; and
defining an angle between the first line and the second line as an azimuthal angle (θx) of the external heat source (200), wherein the azimuthal angle is obtained by using the controlling device (1) to calculate an equation: θ x = (Ts/Tc) × 360°; where Tc is the time unit to rotate though one circle, and Ts is the time point of the largest amplitude of the complete signal data in the unit period Tc ; and
d) when the fact that the external heat source (200) has left out of the scanning area (S) is detected by the infrared sensing apparatus (100), operating the controlling device (1) to selectively order the target positioning portion (241) to stop, and operating the controlling device (1) to order the target positioning portion (241) to align with the aligning member (25).

5. The method as claimed in claim 4, wherein in the detecting step c), when the external heat source (200) entering into the scanning area (S) is detected by the infrared sensing apparatus (100), the controlling device (1) is operated to selectively emit an electrical signal to control an external device.

6. The method as claimed in claim 4, wherein in the detecting step c), when the azimuthal angle is obtained, the controlling device (1) is operated to selectively emit an electrical signal to control an external device.

7. The method as claimed in claim 4, wherein in the detecting step d), when the fact that the external heat source (200) has left out of the scanning area (S) is detected by the infrared sensing apparatus (100), the controlling device (1) is operated to selectively emit an electrical signal to control an external device.

8. The method as claimed in claim 4, wherein in the detecting steps a) ∼ d), the target positioning portion (241) remains to rotate after being driven.

9. The method as claimed in claim 4, wherein in the detecting step a), the infrared sensor (21) is operated to receive a plurality of clocks when the target positioning portion (241) is rotated through one circle, each clock is defined by an external signal being transmitted into the infrared sensor (21) through the target positioning portion (241), the number of the clocks is R and is defined as the unit period; in the detecting step (c), the time point of the external heat source (200) is a Qth clock of the clocks, and the equation becomes: θx = (Q/R) × 360°.

## Patentansprüche

1. Einrichtung (100) zum Feststellen eines Azimutwinkels einer Wärmequelle, Folgendes umfassend:
eine Steuervorrichtung (1), Folgendes umfassend:
eine Leiterplatte (11);
einen Mikrocontroller (12), der elektrisch mit der Leiterplatte (11) verbunden ist; und
ein Antriebsmodul (13), das elektrisch mit der Leiterplatte (11) verbunden ist, wobei das Antriebsmodul (13) über die Leiterplatte (11) elektrisch mit dem Mikrocontroller (12) verbunden ist; und
eine Feststellungsvorrichtung (2), Folgendes umfassend:
eine Drehscheibe (23), die mit dem Antriebsmodul (13) verbunden ist;
ein Bezugselement (27), das auf der Drehscheibe (23) eingerichtet ist;
ein Positionierungselement (24), das auf der Drehscheibe (23) installiert ist und einen Zielpositionierungsabschnitt (241) aufweist, wobei das Antriebsmodul (13) konfiguriert ist,
um das Positionierungselement (24) anzutreiben, um sich entlang einer Achse (C) zu drehen;
einen Infrarotsensor (21), der zum Empfangen eines Infrarotsignals, das durch das Positionierungselement (24) in die Feststellungsvorrichtung (2) übertragen wird, elektrisch mit der Leiterplatte (11) verbunden ist, wobei eine Signalstärke, die durch ein Infrarotsignal definiert ist, das durch den Zielpositionierungsabschnitt (241) des Positionierungselements (24) in den Infrarotsensor (21) übertragen wird, sich von einer Signalstärke, die durch ein Infrarotsignal definiert ist, das durch den anderen Abschnitt des Positionierungselements (24) in den Infrarotsensor (21) übertragen wird, unterscheidet; und
ein Ausrichtungselement (25), das elektrisch mit der Steuervorrichtung (1) verbunden ist,
wobei das Ausrichtungselement (25) und das Bezugselement (27) einen Startzeitbezug gemeinsam definieren, wenn der Zielpositionierungsabschnitt (241) beginnt, sich zu drehen;
**dadurch gekennzeichnet, dass**:
das Positionierelement (24) ferner mehrere um den Zielpositionierungsabschnitt (241) herum angeordnete Kondensationsabschnitte (242) aufweist, der Zielpositionierungsabschnitt (241) mehrere nebeneinander angeordnete konvexe Linsen aufweist und jeder Kondensationsabschnitt (242) eine konvexe Linse ist, die Größe jedes Kondensationsabschnitts (242) kleiner als die Größe jeder konvexen Linse des Zielpositionierungsabschnitts (241) ist, die Kondensationsabschnitte (242) zu mehreren gestapelten C-förmigen Konstruktionen zusammengesetzt sind und die Enden der C-förmigen Konstruktionen mit zwei gegenüberliegenden Kanten des Zielpositionierungsabschnitts (241) verbunden sind, und die Anzahl der konvexen Linsen jeder C-förmigen Konstruktion größer als die Anzahl der konvexen Linsen des Zielpositionierungsabschnitts (241) ist.

2. Einrichtung nach Anspruch 1, ferner umfassend ein Feststellungselement (32), wobei die Einrichtung einen Abtastbereich (S) definiert, wobei die Steuervorrichtung (1) zum Feststellen, ob eine externe Wärmequelle (200) in den Abtastbereich (S) eintritt oder diesen verlässt, elektrisch mit dem Feststellungselement (32) verbunden ist.

3. Einrichtung nach Anspruch 1, ferner umfassend ein Gehäuse (3), wobei das Gehäuse (3) eine Richtungsbeschriftung (31) zum Anordnen einer Feststellungsrichtung der Einrichtung während einer Installation der Einrichtung aufweist.

4. Verfahren zum Feststellen eines Azimutwinkels einer Wärmequelle, Folgendes umfassend:
Bereitstellen einer Infraroterfassungseinrichtung (100), wobei die Infraroterfassungseinrichtung (100) eine Steuervorrichtung (1) und eine Feststellungsvorrichtung (2), die elektrisch mit der Steuervorrichtung (1) verbunden ist, umfasst, wobei die Feststellungsvorrichtung (2) Folgendes umfasst:
einen Zielpositionierungsabschnitt (241), der entlang einer Achse (C) drehbar ist; einen Infrarotsensor (21); und
ein Ausrichtungselement (25), das elektrisch mit der Steuervorrichtung (1) verbunden ist,
wobei das Ausrichtungselement (25) einen Startzeitbezug definiert, wenn der Zielpositionierungsabschnitt (241) beginnt, sich zu drehen;
Implementieren mehrerer Feststellungsschritte durch Verwenden der Infraroterfassungseinrichtung (100), wobei das Verfahren zum Feststellen eines Azimutwinkels einer Wärmequelle **dadurch gekennzeichnet ist, dass** die Feststellungsschritte Folgendes umfassen:
a) Betreiben der Steuervorrichtung (1), um eine Einheitsperiode (Tc) durch Verwenden des Ausrichtungselements (25) festzustellen, und dann Betreiben der Steuervorrichtung (1), um den Zielpositionierungsabschnitt (241) aufzufordern anzuhalten und sich an dem Ausrichtungselement (25) auszurichten, wobei die Einheitsperiode durch Drehen des Zielpositionierungsabschnitts (241) durch einen Kreis und Betreiben der Infraroterfassungseinrichtung (100) definiert ist, um eine Lage einer transienten Wärmequelle in einem Abtastbereich (S) aufzuzeichnen;
b) Betreiben der Infraroterfassungseinrichtung (100), um einen Abtastbereich (S) abzutasten, und wobei die Infraroterfassungseinrichtung (100) betrieben wird, um die Lage der transienten Wärmequelle in dem Abtastbereich (S) zu aktualisieren;
c) sofern eine Verteilung der von der Infraroterfassungseinrichtung (100) empfangenen Signalstärke sich von der Aktualisierungslage der transienten Wärmequelle unterscheidet, beurteilt die Steuervorrichtung (1), dass eine externe Wärmequelle (200) in den Abtastbereich (S) eingetreten ist;
wenn die externe Wärmequelle (200), die in den Abtastbereich (S) eintritt, von der Infraroterfassungseinrichtung (100) festgestellt wird, Betreiben der Steuervorrichtung (1), um den Zielpositionierungsabschnitt (241) anzutreiben, sich zu drehen, und wobei eine Beurteilung der Infraroterfassungseinrichtung (100), die der Position der externen Wärmequelle (200) entspricht, Folgendes umfasst:
Definieren einer Ebene senkrecht zu der Achse (C) als eine Azimutalebene (P), wobei die Achse (C) eine Mittelachse (C) der Azimutalebene (P) ist, wobei in der Azimutalebene (P) das Ausrichtungselement (25) orthogonal auf die Azimutalebene (P) projiziert wird, um eine anfängliche Azimutalposition zu definieren, wobei die Achse (C) und die anfängliche Azimutalposition eine erste dazwischen verbundene Linie gemeinsam definieren und die erste Linie als 0° der Azimutalebene (P) definiert ist;
Definieren eines Zeitpunkts (Ts) der externen Wärmequelle (200) durch Zuordnen einer bestimmten Zeit auf die Einheitsperiode, wobei ein von der externen Wärmequelle (200) emittiertes Infrarotsignal durch den Zielpositionierungsabschnitt (241) zu der bestimmten Zeit in den Infrarotsensor (21) übertragen wird;
Definieren einer Wärmequellenposition durch orthogonales Projizieren des Zielpositionierungsabschnitts (241) auf die Azimutalebene (P) zu dem Zeitpunkt, wobei in der Azimutalebene (P) die Achse (C) und die Wärmequellenposition eine zweite dazwischen verbundene Leitung gemeinsam definieren; und
Definieren eines Winkels zwischen der ersten Linie und der zweiten Linie als ein Azimutwinkel (θx) der externen Wärmequelle (200), wobei der Azimutwinkel durch Verwenden der Steuervorrichtung (1) erhalten wird, um eine Gleichung zu berechnen: θx = (Ts/Tc) × 360°; wobei Tc die Zeiteinheit ist, um durch einen Kreis zu drehen, und Ts der Zeitpunkt der größten Amplitude der vollständigen Signaldaten in der Einheitsperiode Tc ist; und
d) wenn die Tatsache, dass die externe Wärmequelle (200) den Abtastbereich (S) verlassen hat, von der Infraroterfassungseinrichtung (100) festgestellt wird, Betreiben der Steuervorrichtung (1), um den Zielpositionierungsabschnitt (241) selektiv aufzufordern anzuhalten, und Betreiben der Steuervorrichtung (1) um den Zielpositionierungsabschnitt (241) aufzufordern, sich an dem Ausrichtungselement (25) auszurichten.

5. Verfahren nach Anspruch 4, wobei in dem Feststellungsschritt c), wenn die externe Wärmequelle (200), die in den Abtastbereich (S) eintritt, von der Infraroterfassungseinrichtung (100) festgestellt wird, die Steuervorrichtung (1) betrieben wird, um ein elektrisches Signal selektiv zu emittieren, um eine externe Vorrichtung zu steuern.

6. Verfahren nach Anspruch 4, wobei in dem Feststellungsschritt c), wenn der Azimutwinkel erhalten wird, die Steuervorrichtung (1) betrieben wird, um ein elektrisches Signal selektiv zu emittieren, um eine externe Vorrichtung zu steuern.

7. Verfahren nach Anspruch 4, wobei in dem Feststellungsschritt d), wenn die Tatsache, dass die externe Wärmequelle (200) den Abtastbereich (S) verlassen hat, von der Infraroterfassungseinrichtung (100) feststellt wird, die Steuervorrichtung (1) betrieben wird, um ein elektrisches Signal selektiv zu emittieren, um eine externe Vorrichtung zu steuern.

8. Verfahren nach Anspruch 4, wobei in den Feststellungsschritten a) ∼ d), der Zielpositionierungsabschnitt (241) verbleibt, um sich zu drehen, nachdem er angetrieben wurde.

9. Verfahren nach Anspruch 4, wobei in dem Feststellungsschritt a) der Infrarotsensor (21) betrieben wird, um mehrere Takte zu empfangen, wenn der Zielpositionierungsabschnitt (241) durch einen Kreis gedreht wird, wobei jeder Takt dadurch definiert ist, dass ein externes Signal durch den Zielpositionierungsabschnitt (241) in den Infrarotsensor (21) übertragen wird, wobei die Anzahl der Takte R ist und als die Einheitsperiode definiert ist; wobei in dem Feststellungsschritt (c) der Zeitpunkt der externen Wärmequelle (200) ein Qtel Takt der Takte ist, und die Gleichung zu Folgendem wird: θx = (Q/R) x 360°.

## Revendications

1. Appareil (100) permettant de détecter un angle d'azimut d'une source de chaleur, comprenant :
un dispositif de commande (1), comprenant :
une carte de circuit imprimé (11) ;
un microcontrôleur (12) connecté électriquement à la carte de circuit imprimé (11) ; et
un module d'entraînement (13) connecté électriquement à la carte de circuit imprimé (11),
le module d'entraînement (13) étant connecté électriquement au microcontrôleur (12) par le biais de la carte de circuit imprimé (11) ; et
un dispositif de détection (2), comprenant :
un plateau (23) connecté au module d'entraînement (13) ;
un élément de référence (27) disposé sur le plateau (23) ;
un élément de positionnement (24) installé sur le plateau (23) et possédant une partie de positionnement cible (241), le module d'entraînement (13) étant conçu pour entraîner l'élément de positionnement (24) à tourner sur un axe (C) ;
un capteur infrarouge (21) connecté électriquement à la carte de circuit imprimé (11) pour recevoir un signal infrarouge transmis au dispositif de détection (2) par l'intermédiaire de l'élément de positionnement (24), une intensité de signal définie par un signal infrarouge transmis au capteur infrarouge (21) par l'intermédiaire de la partie de positionnement cible (241) de l'élément de positionnement (24) étant différente d'une intensité de signal définie par un signal infrarouge transmis au capteur infrarouge (21) par l'intermédiaire de l'autre partie de l'élément de positionnement (24) ; et
un élément d'alignement (25) connecté électriquement au dispositif de commande (1), l'élément d'alignement (25) et l'élément de référence (27) co-définissant une référence de temps de démarrage lorsque la partie de positionnement cible (241) commence à tourner ;
**caractérisé en ce que** :
l'élément de positionnement (24) possède en outre une pluralité de parties de condensation (242) disposées autour de la partie de positionnement cible (241), la partie de positionnement cible (241) possède une pluralité de lentilles convexes disposées côte à côte, et chaque partie de condensation (242) est une lentille convexe, la taille de chaque partie de condensation (242) est plus petite que la taille de chaque lentille convexe de la partie de positionnement cible (241), les parties de condensation (242) sont assemblées de façon à former une pluralité de constructions en forme de C superposées, et les extrémités des constructions en forme de C sont connectées à deux bords opposés de la partie de positionnement cible (241), et le nombre de lentilles convexes de chaque construction en forme de C est supérieur au nombre de lentilles convexes de la partie de positionnement cible (241).

2. Appareil selon la revendication 1, comprenant en outre un élément de détection (32), l'appareil définissant une zone de balayage (S), dans lequel le dispositif de commande (1) est connecté électriquement à l'élément de détection (32) afin de détecter si une source de chaleur externe (200) pénètre dans la zone de balayage (S) ou évite celle-ci.

3. Appareil selon la revendication 1, comprenant en outre un boîtier (3), dans lequel le boîtier (3) possède une étiquette de direction (31) servant à mettre en place une direction de détection de l'appareil pendant une installation de l'appareil.

4. Procédé de détection d'un angle d'azimut d'une source de chaleur, comprenant :
la fourniture d'un appareil de détection infrarouge (100), l'appareil de détection infrarouge (100) comprenant un dispositif de commande (1) et un dispositif de détection (2) connecté électriquement au dispositif de commande (1), le dispositif de détection (2) comprenant :
une partie de positionnement cible (241) qui peut tourner sur un axe (C) ; un capteur infrarouge (21) ; et
un élément d'alignement (25) connecté électriquement au dispositif de commande (1), l'élément d'alignement (25) définissant une référence de temps de démarrage lorsque la partie de positionnement cible (241) commence à tourner ;
la mise en œuvre d'une pluralité d'étapes de détection à l'aide de l'appareil de détection infrarouge (100), le procédé de détection d'un angle d'azimut d'une source de chaleur étant **caractérisé en ce que** les étapes de détection comprennent :
a) l'actionnement du dispositif de commande (1) afin de détecter une période unitaire (Tc) à l'aide de l'élément d'alignement (25), et subséquemment l'actionnement du dispositif de commande (1) pour ordonner à la partie de positionnement cible (241) de s'arrêter et de s'aligner avec l'élément d'alignement (25), la période unitaire étant définie par une rotation de la partie de positionnement cible (241) selon un cercle, et l'actionnement de l'appareil de détection infrarouge (100) afin d'enregistrer une situation d'une source de chaleur transitoire dans une zone de balayage (S) ;
b) l'actionnement de l'appareil de détection infrarouge (100) afin de balayer une zone de balayage (S), l'appareil de détection infrarouge (100) étant actionné afin de mettre à jour la situation de la source de chaleur transitoire dans la zone de balayage (S) ;
c) si une distribution de l'intensité de signal reçue par l'appareil de détection infrarouge (100) est différente de la situation de mise à jour de la source de chaleur transitoire, l'estimation par le dispositif de commande (1) qu'une source de chaleur externe (200) a pénétré dans la zone de balayage (S) ;
lorsque la source de chaleur externe (200) pénétrant dans la zone de balayage (S) est détectée par l'appareil de détection infrarouge (100), l'actionnement du dispositif de commande (1) afin d'entraîner la partie de positionnement cible (241) en rotation, et une estimation de l'appareil de détection infrarouge (100) correspondant à la position de la source de chaleur externe (200) comprenant :
la définition d'un plan perpendiculaire à l'axe (C) comme étant un plan azimutal (P), dans laquelle l'axe (C) est un axe central (C) du plan azimutal (P), dans laquelle, au niveau du plan azimutal (P), l'élément d'alignement (25) est orthogonalement projeté sur le plan azimutal (P) de façon à définir une position d'azimut initiale, l'axe (C) et la position d'azimut initiale co-définissent une première ligne connectée entre ceux-ci, et la première ligne est définie comme étant 0° du plan azimutal (P) ;
la définition d'un point temporel (Ts) de la source de chaleur externe (200) en mappant un temps particulier sur la période unitaire, un signal infrarouge émis par la source de chaleur externe (200) étant transmis au capteur infrarouge (21) par l'intermédiaire de la partie de positionnement cible (241) au moment particulier ;
la définition d'une position de la source de chaleur par projection orthogonale de la partie de positionnement cible (241) sur le plan azimutal (P) au point temporel, dans laquelle, dans le plan azimutal (P), l'axe (C) et la position de la source de chaleur co-définissent une seconde ligne connectée entre eux ; et
la définition d'un angle entre la première ligne et la seconde ligne comme étant un angle azimutal (θx) de la source de chaleur externe (200), l'angle azimutal étant obtenu en utilisant le dispositif de commande (1) pour calculer une équation : θx = (Ts / Tc) x 360 ° ; où Tc est l'unité de temps de rotation selon un cercle, et Ts est le point temporel de la plus grande amplitude des données de signal complètes dans la période unitaire Tc ; et
d) lorsque le fait que la source de chaleur externe (200) a quitté la zone de balayage (S) est détecté par l'appareil de détection infrarouge (100), l'actionnement du dispositif de commande (1) afin d'ordonner sélectivement à la partie de positionnement cible (241) de s'arrêter, et l'actionnement du dispositif de commande (1) afin d'ordonner à la partie de positionnement cible (241) de s'aligner avec l'élément d'alignement (25).

5. Procédé selon la revendication 4, dans lequel durant l'étape de détection c), lorsque la pénétration de la source de chaleur externe (200) dans la zone de balayage (S) est détectée par l'appareil de détection infrarouge (100), le dispositif de commande (1) est actionné de façon à émettre sélectivement un signal électrique pour commander un appareil externe.

6. Procédé selon la revendication 4, dans lequel durant l'étape de détection c), lorsque l'angle d'azimut est obtenu, le dispositif de contrôle (1) est actionné de façon à émettre sélectivement un signal électrique pour commander un dispositif externe.

7. Procédé selon la revendication 4, dans lequel durant l'étape de détection d), lorsque le fait que la source de chaleur externe (200) a quitté la zone de balayage (S) est détecté par l'appareil de détection infrarouge (100), le dispositif de commande (1) est actionné de façon à émettre sélectivement un signal électrique pour commander un dispositif externe.

8. Procédé selon la revendication 4, dans lequel durant les étapes de détection a) ∼ d), la partie de positionnement cible (241) reste en rotation après avoir été entraînée.

9. Procédé selon la revendication 4, dans lequel durant l'étape de détection a), le capteur infrarouge (21) est actionné de façon à recevoir une pluralité d'horloges lorsque la partie de positionnement cible (241) subit une rotation selon un cercle, chaque horloge est définie par un signal externe transmis au capteur infrarouge (21) par l'intermédiaire de la partie de positionnement cible (241), le nombre d'horloges est R et est défini comme étant la période unitaire ; dans l'étape de détection (c), le point temporel de la source de chaleur externe (200) est une Q^{ème} horloge parmi les horloges, et l'équation devient : θx = (Q / R) x 360 °.
